# EUROPÄISCHE PATENTSCHRIFT

(11) **EP 3 121 137 B1**
(45) Veröffentlichungstag und Bekanntmachung des Hinweises auf die Patenterteilung: **26.02.2020**
(21) Anmeldenummer: 16179775.8
(22) Anmeldetag: 15.07.2016
(51) Int. Cl.: B65G 49/06

(54) **MONOLITHISCHE UNTERLAGE ZUR VOLLFLÄCHIGEN UNTERSTÜTZUNG EINES WERKSTÜCKS**
MONOLITHIC SUPPORT FOR FULL AREA SUPPORT OF A WORKPIECE
BASE MONOLITHIQUE DESTINEE A SUPPORTER UNE PIECE SUR TOUTE SA SURFACE

(30) Priorität: 23.07.2015 DE 102015112036
(43) Veröffentlichungstag der Anmeldung: 25.01.2017
(73) Patentinhaber: Schott AG, 55122 Mainz (DE)
(72) Erfinder: GEHINDY, Thorsten, 55437 Appenheim (DE); THOMAS, Armin, 55270 Engelstadt (DE); Weisenburger, Marco, 55278 Undenheim (DE); Werner, Thomas, 55411 Bingen (DE)
(74) Vertreter: Blumbach · Zinngrebe Patentanwälte PartG mbB

(56) Entgegenhaltungen:
- WO-A2-2004/033197
- DE-U1- 8 505 130
- US-A- 4 883 525
- US-A1- 2009 155 024
- US-A1- 2012 159 989
- US-A1- 2015 175 467
- US-B2- 6 969 224

## Beschreibung

### Gebiet der Erfindung

Die Erfindung betrifft eine monolithische Unterlage zur vollflächigen Unterstützung eines Werkstücks gemäß Anspruch 1.

### Hintergrund der Erfindung

Bei der Herstellung großformatiger Werkstücke aus sprödem oder sprödhartem Material, beispielsweise bei der Fertigung von Spiegelträgern aus Glas, Glaskeramik oder Keramik, kommt es nach der eigentlichen Fertigung des Spiegelträgers noch zu weiteren Bearbeitungsschritten wie beispielsweise Schleifen und Bohren, Polieren, Beschichten. Um dabei Beschädigungen des zumeist in einem sehr aufwendigen und daher kostenintensiven Verfahren hergestellten Spiegelträgers zu vermeiden, muss dieser bei nachfolgenden Bearbeitungsschritten unterstützt werden. Auch für den Transport solcher Systeme sind Unterlagen notwendig, um eine Beschädigung des Werkstücks zu unterbinden.

Bislang werden zur Unterstützung von dünnen Spiegelträgern Stahl-Stützkonstruktionen verwendet. Diese haben jedoch den Nachteil, dass sie keine vollflächige Unterstützung des auflagernden Werkstücks ermöglichen, so dass es hier dazu kommen kann, dass das auflagernde Werkstück nicht formstabil bleibt, sondern sich durch die Einwirkung äußerer Kräfte, beispielsweise unter Einwirkung der Schwerkraft, verformt.

Dies ist insbesondere dann von Bedeutung, wenn es sich bei dem Werkstück um Spiegelträger mit einem sehr großen Aspektverhältnis von 50 oder mehr handelt, wobei das Aspektverhältnis hierbei definiert ist als das Verhältnis von Durchmesser des Spiegelträgers zu seiner mittleren Dicke. Mit dem hohen Aspektverhältnis geht im Allgemeinen auch ein niedriges Flächengewicht einher.

In der EP 1 391 433 A2 ist beispielhaft eine Form beschrieben, auf die durch Absenkung unter Schwerkrafteinfluss ein Rohling eines Spiegelträgers aus Glas oder Glaskeramik abgesenkt werden kann, wobei die Form selbst aus einer Keatit-Glaskeramik besteht.

Eine solche Form aus Keatit-Glaskeramik weist dabei eine Reihe vorteilhafter Eigenschaften, beispielsweise eine sehr hohe Temperaturbeständigkeit, auf. Allerdings ist die Herstellung eines solchen Form bzw. Unterlage für einen Spiegelträger mit hohem Aufwand und entsprechend mit hohen Kosten verbunden. So wird zunächst ein Block aus einer Glasschmelze gegossen und anschließend in einem ersten sogenannten Keramisierungsschritt in eine Hochquarz-Mischkristall-Glaskeramik überführt. Sodann wird ein geeignetes Rohteil aus dem so erhaltenen Block mechanisch herausgeschnitten und schließlich in einem weiteren Keramisierungsschritt in eine Keatit-Mischkristall-Glaskeramik überführt. Um eine ausreichende Oberflächenqualität der so erhaltenen Form zu gewährleisten, wird die Form erneut mechanisch bearbeitet und anschließend geläppt. Der aufwendige Herstellprozess bedingt hohe Kosten, so dass eine solche Glaskeramik-Unterlage zwar prinzipiell für die Fertigung von Spiegelträgersubstraten geeignet ist, allerdings nicht für den Transport solcher Substrate oder den Verbleib beim Kunden in Betracht kommt. Weiterhin ist die Möglichkeit einer strukturierteren Formgebung, beispielsweise in Form filigraner Oberflächenstrukturen, durch das mehrstufige Herstellverfahren für eine Glaskeramik-Form erschwert.

Das Gebrauchsmuster De 85 05 130 U1 betrifft einen Reflektor eines Spiegelteleskops aus einem monolithischen Bauteilkörper und beschreibt weiterhin einen Betonblockkörper als Hilfsvorrichtung für die Herstellung eines solchen Reflektorkörpers.

US2015/175467 A1 enthält ein Verfahren zum Bilden eines Formlings, wobei das Verfahren Folgendes aufweist: Bereitstellen einer Form mit mindestens einer Öffnung und mit einem pyrolytischen Kohlenstofffilm, der zumindest über einer oder mehreren Wänden der mindestens einen Öffnung ausgebildet ist; Füllen der mindestens einen Öffnung mit einem Formmaterial; und Entnehmen des Formmaterials aus der Form.

US4883525 A beschreibt ebenfalls eine Antihaftbeschichtung. Es sich um eine Farbe ("paint") handelt, welche im Wesentlichen aus anorganischen Substanzen besteht, nämlich Glimmer, Titanoxid und Aluminiumoxid.

Die deutsche Offenlegungsschrift DE 196 19 021 A1 beschreibt ein Verfahren zur Herstellung eines Parabolspiegels, wobei das Verhältnis von Durchmesser zu dessen mittlerer Dicken mindestens 50 beträgt.

Die deutsche Offenlegungsschrift DE 101 25 554 A1 betrifft einen ultraleichten und ultrasteifen vollkeramischen Reflektor und ein Verfahren zu dessen Herstellung. Dieser hat ein Flächengewicht von 100 kg/m² oder weniger.

Die europäische Patentanmeldung EP 1 391 433 A2 beschreibt ein Verfahren zur Formung von Glas oder Glaskeramik und zur Herstellung einer dafür geeigneten Form. Die Glaskeramik kann hierbei einen thermischen Ausdehnungskoeffizienten kleiner oder gleich 3^{∗}10⁻⁶/K haben.

Schließlich beschreibt die deutsche Offenlegungsschrift DE 10 2004 059 727 A1 ein Verfahren und eine Vorrichtung zum kontaktlosen Transportieren oder Lagern von Glas oder Glaskeramik. Die Auflagefläche ist hierbei zusammenhängend ausgebildet.

Es besteht somit ein Bedarf an einer Unterlage zur im Wesentlichen vollflächigen Unterstützung großformatiger Werkstücke, insbesondere mit einem Aspektverhältnis von 50 oder mehr, die die Formstabilität des Werkstücks während Nachbearbeitung und Transport gewährleistet und deren Oberfläche strukturiert hergestellt werden kann.

### Aufgabe der Erfindung

Die Aufgabe der Erfindung besteht in der Bereitstellung einer Unterlage zur vollflächigen Unterstützung großformatiger Werkstücke, insbesondere mit einem Aspektverhältnis von größer oder gleich 50, sowie einer strukturiert hergestellten Oberfläche.

### Zusammenfassung der Erfindung

Die Aufgabe wird gelöst durch eine monolithische Unterlage zur vollflächigen Unterstützung eines Werkstücks gemäß Anspruch 1, sowie einen Verbund aus einer monolithischen mineralbasierten Unterlage und aufgelagertem Werkstück in Form eines Glas-, Glaskeramik- oder Keramikelements gemäß Anspruch 13. Weitere Ausführungsformen finden sich in den jeweiligen Unteransprüchen.

Die monolithische Unterlage zur vollflächigen Unterstützung eines Werkstücks bei Bearbeitung und/oder Transport ist dabei dadurch gekennzeichnet, dass die Oberfläche der Unterlage, speziell die Auflagefläche für das Werkstück, so ausgestaltet ist, dass Anhaftungen des aufliegenden Werkstücks unterbunden werden. Die Unterlage weist ferner Vorrichtungen auf, mit denen das Werkstück durch Anheben von unten, insbesondere durch Überdruck, von der Unterlage gelöst und/oder lateral verschoben werden kann.

Als monolithisch wird im Rahmen dieser Anmeldung dabei insbesondere verstanden, dass die Unterlage nicht aus mehreren einzelnen Bauteilen, die mittels physikalischer oder chemischer Befestigungshilfen miteinander verbunden werden, besteht, sondern als Ganzes in einem Stück gefertigt wird. Als monolithisch wird die Unterlage, im Rahmen dieser Erfindung auch dann bezeichnet, wenn es in einem mehrstufigen Verfahren, beispielsweise zunächst durch Herstellung eines Grundmaterials und in einem weiteren Schritt durch Aufbringung eines weiteren Materials, hergestellt wird. In einem solchen zweistufigen Verfahren zur Herstellung einer Unterlage kommt es direkt bei der Herstellung prozessbedingt zu einer innigen, stoffschlüssigen Verbindung der beiden Materialien in situ, so dass auch hier von einem monolithischen Ganzen ausgegangen werden kann. Beispielhaft weist eine solche, in einem mehrstufigen Verfahren hergestellte monolithische Unterlage zwei unterschiedliche Betonschichten auf.

Im Rahmen der vorliegenden Erfindung bedeutet das Anheben (entweder nur zum Lösen von der Unterlage oder auch zum Anheben, ohne die Spiegeloberfläche zu berühren) des Werkstücks von unten dabei, dass zum Anheben keine Vorrichtungen wie Saugknöpfe, Greifer o.ä. von oben an das Werkstück herangeführt werden und dieses zum Zweck des Anhebens berühren. Dabei kann weiterhin ein Kontakt zwischen der Unterseite des Werkstücks und der Unterlage bzw. Teilen der Unterlage bestehen, beispielsweise, wenn die Unterlage Mittel aufweist, die aus der Oberfläche der Unterlage herausbewegt werden können. Allerdings ist auch ein Anheben möglich, bei dem zwischen Werkstück und Unterlage keinerlei Kontakt besteht und das Werkstück sich in einem schwebenden Zustand oberhalb der Unterlage befindet, beispielsweise durch Levitation.

In einer Ausführungsform der Erfindung sind die Mittel zum Anheben von unten und/oder lateralen Verschieben des Werkstücks von der Unterlage pneumatisch und/oder hydraulisch ausgebildet.

In einer weiteren Ausführungsform der Erfindung umfassen die Mittel zum Anheben von unten und/oder lateralem Verschieben des Werkstücks von der Unterlage mindestens eine Düse, durch die mindestens ein Fluid, vorzugsweise Luft, Öl oder Wasser, leitbar ist.

Bevorzugt sind die Mittel zum Anheben des Werkstücks von unten von der Unterlage kissenartig ausgebildet.

Bevorzugt ist die Unterlage dergestalt ausgebildet, dass das Werkstück durch Einleitung eines Fluids, vorzugsweise Luft, Öl oder Wasser, in die kissenartig ausgebildeten Mittel angehoben wird.

Bei dem Werkstück handelt es sich in der Regel um großformatige Bauteile mit einem großen Aspektverhältnis von mindestens 50 von Durchmesser des Bauteils zu seiner mittleren Dicke. Das Werkstück der vorliegenden Erfindung kann aus Glas, Glaskeramik oder Keramik bestehen und weist gemäß einer Ausführungsform der Erfindung einen thermischen Ausdehnungskoeffizienten α von kleiner oder 3^{∗}10⁻⁶/K, bevorzugt von kleiner oder gleich 1^{∗}10⁻⁶/K auf, besonders bevorzugt von kleiner oder gleich 0,1^{∗}10⁻⁶/K und ganz besonders bevorzugt kleiner oder gleich 0,05^{∗}10⁻⁶/K auf.

Der thermische Ausdehnungskoeffizient α ist dabei, sofern nicht anders angegeben, im Bereich von 0-50°C angegeben, jedoch betrifft die Erfindung auch Materialien mit geringer thermischer Ausdehnung, deren Ausdehnungskoeffizient in einem anderen Temperaturbereich gemessen wurde. Beim Wert handelt es sich um den nominalen mittleren thermischen Längenausdehnungskoeffizienten gemäß ISO 7991, welcher in statischer Messung bestimmt ist.

In einer Ausführungsform der Erfindung besteht das Werkstück aus einem Glas, beispielsweise einem mit TiO₂ dotierten Quarzglas, oder einer Glaskeramik, beispielsweise einer Lithium-Aluminium-Silikatglaskeramik, oder einer Keramik, beispielsweise aus SiC oder einer Magnesium-Aluminium-Silikatkeramik oder auch aus einem Cordierithaltigen Material.

Das Werkstück ist gemäß einer Ausführungsform der Erfindung ein Substrat für einen Spiegelträger für Präzisionsanwendungen, beispielsweise in der Messtechnik, Astronomie, LCD-Lithographie oder Mikrolithographie.

An solche Bauteile werden dabei hohe Anforderungen gestellt, beispielsweise hinsichtlich ihrer Oberflächegüte, aber auch hinsichtlich ihrer Formstabilität. Gleichzeitig besteht aber insbesondere bei Bauteilen für die Astronomie auch der Bedarf danach, dass solche Bauteile ein niedriges Flächengewicht aufweisen, um beispielsweise leichter in das Weltall transportiert werden zu können. Aus diesem Grund werden häufig sehr dünne Werkstücke, d.h. mit einem hohen Aspektverhältnis von Durchmesser zu mittlerer Dicke, verwendet, oder es werden zur Verbesserung der Steifigkeit und damit der Formstabilität des Werkstücks auf dessen Rückseite Ausnehmungen eingebracht. Beispielhaft sind solche Substrate für Spiegelträger in der DE 10 2008 039 042 B4, der DE 10 2009 005 400 B4 sowie der DE 10 2011 008 953 A1 beschrieben. Die dort beschriebenen Werkstücke sind zwar prinzipiell hinsichtlich Formstabilität und Steifigkeit optimiert, dennoch handelt es sich dabei weiterhin um sehr empfindliche und filigrane Bauteile, die bei Bearbeitung und Transport zur Vermeidung von Verformungen und Beschädigung einer geeigneten Unterlage bedürfen.

Das Aspektverhältnis solcher Werkstücke, also das Verhältnis vom Durchmesser bzw. lateraler Abmessung des Werkstücks zu dessen mittlerer Dicke, beträgt mindestens 50, bevorzugt mindestens 100, besonders bevorzugt mindestens 150 sowie ganz besonders bevorzugt mindestens 200. Am meisten ist ein Aspektverhältnis von 300 oder mehr bevorzugt.

Das hohe Aspektverhältnis dieser Werkstücke bedingt in der Regel auch ein geringes Flächengewicht. In einer Ausführungsform der Erfindung beträgt dieses Flächengewicht 100 kg/m² oder weniger, bevorzugt 50 kg/m² oder weniger und besonders bevorzugt 30 kg/m² oder weniger.

Eine geeignete Unterlage zu der Bearbeitung solcher Werkstücke muss daher so ausgerüstet sein, dass die Formstabilität des auflagernden Werkstücks gewährleistet bleibt und es zu keiner Beschädigung der Oberfläche des Werkstücks bei Bearbeitung und Transport kommt. Dies wird in der vorliegenden Erfindung folgendermaßen gewährleistet.

So ist zum einen die Oberfläche der Unterlage an den Segmenten, an denen das auflagernde Werkstück direkten Kontakt mit der Unterlage hat, dergestalt ausgerüstet, dass Anhaftungen an der Oberfläche des aufliegenden Werkstücks unterbunden werden.

Meist ist die Oberfläche der monolithischen Unterlage gewölbt ausgebildet, wobei gilt, dass die Oberfläche der monolithischen Unterlage eine Krümmung aufweist, die entgegengesetzt der Wölbung derjenigen Fläche des Glas-, Glaskeramik- oder Keramikelements ausgebildet ist, welche auf der Oberfläche der monolithischen Unterlage aufliegt. Ist die Oberfläche der monolithischen Unterlage konvex gewölbt, weist die auf der Oberfläche der Unterlage aufliegende Fläche des Glas-, Glaskeramik- oder Keramikelements somit eine konkave Wölbung auf; ist hingegen die Oberfläche der monolithischen Unterlage konkav gewölbt, ist die auf der Oberfläche der Unterlage aufliegende Fläche des Glas-, Glaskeramik- oder Keramikelements somit konvex gewölbt. Die Oberfläche der Unterlage und die auf dieser aufliegenden Fläche des Werkstücks, beispielsweise des Glas- Glaskeramik- oder Keramikelements, sind mithin gegengleich gewölbt. Gemäß anderer Ausführungsformen weisen Werkstück und Unterlage keine Wölbung auf, Werkstück und Unterlage haben somit eine plane Auflagefläche.

In einer Ausführungsform der Erfindung ist die Oberfläche der Unterlage zumindest teilweise mit einer Antihaftbeschichtung und/oder einer Dichtung ausgerüstet. In einer Ausführungsform der Erfindung sind dabei mindestens der innere sowie der äußere Rand der Unterlage mit einer solchen Antihaftbeschichtung versehen.

Gemäß der Erfindung ist die Antihaftbeschichtung dabei als mindestens eine Folie oder ein Verbund von Folien ausgebildet. Bevorzugt ist die mindestens eine Folie dabei als Polymerfolie ausgebildet oder umfasst ein Polymer. Im Rahmen der vorliegenden Erfindung wird dabei unter dem Begriff des Polymers bevorzugt ein organisches Polymer verstanden. Unter einer Folie, welche ein Polymer umfasst, wird dabei insbesondere auch eine Kunststofffolie verstanden.

Beispielhaft ist es möglich, dass eine solche Folie auf die Unterlage aufgebracht wird. Es ist aber auch möglich, dass zunächst Vorläufermaterialien auf die Unterlage aufgebracht werden und das Polymer in situ auf der Oberfläche ausgebildet wird, also die Polymerisationsreaktion direkt auf der Oberfläche der Unterlage stattfindet.

Gemäß einer Ausführungsform ist die Folie dabei als dichtes Material ausgebildet. Darunter wird im Rahmen der vorliegenden Erfindung verstanden, dass die Folie auch als Dichtung verwendet werden kann, also dicht gegenüber dem Durchtritt von fluiden Stoffen, beispielsweise Flüssigkeiten, aber auch Gasen, ausgebildet ist.

Gemäß einer Ausführungsform ist die Folie als Polymerfolie mit Antihafteigenschaften ausgebildet.

Bevorzugt besteht die mindestens eine Folie aus Polypropylen (PP) oder Polyethylen (PE).

Die Dicke einer einzelnen Folie beträgt bevorzugt mindestens 50 µm, bevorzugt mindestens 60 µm und besonders bevorzugt mindestens 65 µm.

In einer Ausführungsform der Erfindung ist die Antihaftbeschichtung als ein Verbund von Folien, beispielsweise aus 3 Folien, gebildet.

Die Folie bzw. die Folien können in einem Stück als Ganzes auf die Oberfläche der Unterlage aufgebracht werden oder in Form einzelner, kleinerer Stücke. Im letzteren Fall erfolgt das Aufbringen der Folien dabei dergestalt, dass benachbarte Folienstücke optimal aneinander stoßen und keine Lücken oder überlappenden Stöße dort entstehen, wo die Folien aneinander grenzen. Auf diese Weise ist eine allseits glatte Oberfläche gewährleistet.

Die Folie wird gemäß einer Ausführungsform über die gesamte Fläche der Unterlage aufgebracht.

In einer Ausführungsform der Erfindung weist die Unterlage zentral, also im Bereich der geometrischen Mitte der Unterlage, eine Vertiefung bzw. eine Öffnung auf. Eine solche zentrale Vertiefung bzw. Öffnung ist insbesondere deswegen sinnvoll, da auch diese Weise mögliche Ungleichheiten in den Wölbungen von auflagerndem Werkstück, beispielsweise von Glas- Glaskeramik- oder Keramikelement, relativ zur der Unterlage ausgeglichen werden. Auf diese Weise wird erreicht, dass das Werkstück stabil aufliegt.

Gemäß einer anderen Ausführungsform wird die Folie nur über einen Teil der Fläche der Unterlage aufgebracht. Vorzugsweise sind zumindest der äußere und innere Rand der Unterlage vollständig beschichtet. Die übrige Fläche kann ganz oder teilweise beschichtet sein, beispielsweise punktförmig, netzförmig, ringförmig oder in weiteren Ausführungen.

Gemäß einer weiteren Ausführungsform weist die Unterlage durchgehende Bohrungen auf. Mittels dieser Bohrungen ist es möglich, Überdruck anzulegen, so dass es zum Lösen des Werkstücks von der Unterlage kommt. Dies ist insbesondere dann möglich, wenn mindestens der innere und der äußere Rand der Unterlage mit Folie versehen sind. Die Folie dichtet dabei dergestalt ab, dass das Anlegen eines erhöhten Drucks ermöglicht ist.

Die Oberfläche der Unterlage kann durch eine Hüllkurve angenähert werden. Dabei kann diese Hüllkurve auch verstanden werden als vorgegebene Form der Oberfläche der Unterlage. Die Güte der Unterlage ist dann gekennzeichnet durch die Abweichung, die zwischen der realen Oberfläche der Unterlage und der sie idealerweise beschreibenden Hüllkurve vorliegt. Je nach Durchmesser des Werkstückes ergeben sich dabei unterschiedliche, noch tolerable Abweichungen zwischen Hüllkurve und tatsächlicher Oberfläche.

So beträgt die Abweichung von der Hüllkurve für ein Werkstück mit 4 m Durchmesser maximal 0,5 mm, bevorzugt höchstens 0,025 mm. Für ein Werkstück mit 2 m Durchmesser beträgt diese Abweichung höchstens 0,2 mm und bevorzugt höchstens 0,025 mm, bei 1 m Durchmesser höchstens 0,1 mm und bevorzugt höchstens 0,01 mm sowie bei 0,5 m Durchmesser höchstens 0,05 mm und bevorzugt höchstens 0,005 mm.

Die Dicke der Folie bzw. der Folien bzw. des Folienverbunds ist dabei zweckmäßigerweise so zu wählen, dass sie mindestens so groß ist wie die Abweichung der tatsächlichen Form der Oberfläche von der idealen Hüllkurve ist. Für ein Werkstück mit einem Durchmesser von 0,5 m sollte die Gesamtdicke der aufgebrachten Folien daher mindestens 5 µm betragen; für ein Werkstück mit einem Durchmesser von 4 m beträgt diese Dicke mindestens 25 µm. Die Gesamtdicke der Folien bzw. des Folienverbundes beträgt höchstens 10 mm, bevorzugt maximal 5 mm.

Eine weitere Möglichkeit, Beschädigungen der Oberfläche des auflagernden Werkstücks zu unterbinden, besteht in der geeigneten Auswahl des Materials der Unterlage.

Die Unterlage muss eine ausreichende Festigkeit gegenüber mechanischer Verformung durch die Schwerkraft des auflagernden Werkstücks gewährleisten, d.h. über eine hohe mechanische Stabilität sowie über eine hohe Formstabilität verfügen. Dies wird in der vorliegenden Erfindung dadurch erzielt, dass die Unterlage im Wesentlichen anorganisch ausgebildet ist.

Gemäß der Erfindung umfasst die Unterlage dabei mindestens ein mineralbasiertes Material, beziehungsweise umfasst einen mineralischen Träger.

Unter einem mineralbasierten Material wird in der vorliegenden Erfindung ein anorganisches, nichtmetallisches Material verstanden. Ein mineralbasiertes Material im Sinne der vorliegenden Erfindung umfasst dabei sowohl kristalline anorganische nichtmetallische Verbindungen als auch amorphe anorganische nichtmetallische Stoffe, beispielsweise ausgebildet als Glas oder Gel. Ebenfalls zählen hierzu Mischungen aus anorganischen nichtmetallischen Stoffen, wie sie beispielsweise bei einer Gesteinskörnung, die als Zuschlag für die Herstellung von Beton verwendet wird, vorliegt. Das mineralbasierte Material im Sinne der vorliegenden Erfindung kann sowohl auf natürlichem Wege entstanden sein, beispielsweise durch in der Natur stattfindende geologische Prozesse, oder auch auf künstlichem Wege hergestellt worden sein.

In einer Ausführungsform der Erfindung ist die Unterlage dabei durch ein Gussverfahren zum Formguss mit im Wesentlichen anorganischen nichtmetallischen Gussmassen erhalten worden.

Bevorzugt werden die Gussmassen gebildet aus mindestens einem anorganischen nichtmetallischen Feststoff, mindestens einem Flussmittel sowie mindestens einem Bindemittel.

Der mindestens eine, anorganische nichtmetallische Feststoff ist bevorzugt als Körnung ausgebildet. Als Körnung wird dabei ein Material bezeichnet, das aus feinen Partikeln mit Korndurchmessern im Millimeterbereich gebildet ist. Bevorzugt beträgt der d₉₉ der die Körnung bildenden Partikel dabei 20 mm, d.h. mindestens 99 % der Partikel weisen einen Durchmesser von 20 mm oder weniger auf. Enthält die Körnung mehr als 1 % Partikel, die einen Korndurchmesser von mehr als 20 mm aufweisen, so kann es zur Ausbildung von Oberflächendefekten durch mechanische Verletzung der Oberfläche des auflagernden Werkstücks kommen.

Das in der Gussmasse enthaltene mindestens eine Flussmittel umfasst bevorzugt Wasser.

In einer bevorzugten Form der Erfindung besteht das mindestens eine Bindemittel aus Zement und/oder einem Epoxidharz und/oder einem organisch-anorganischem Hybridmaterial wie einem Sol-gel, beispielsweise einem TEOS-basierten SiO₂-Sol.

Als Zement wird dabei im Rahmen der vorliegenden Erfindung ein anorganisches nichtmetallisches Material bezeichnet, das mit Wasser oder anderen anorganischen Verbindungen wie beispielsweise CO₂ unlösliche anorganische Verbindungen bildet. Durch die Bildung dieser unlöslichen anorganischen Verbindungen werden dabei andere nichtlösliche Bestandteile der Gussmasse, insbesondere der Feststoff, miteinander dergestalt verbunden, dass ein fester, im Wesentlichen anorganischer Formkörper entsteht.

Als im Wesentlichen anorganisch wird ein Formkörper im Rahmen dieser Erfindung verstanden, wenn organische Verbindung nicht mehr als 20 Gew.-% ausmachen. Insbesondere ist ein Formkörper im Rahmen dieser Erfindung im Wesentlichen anorganisch ausgebildet, wenn als Bindemittel zur Herstellung des Formkörpers ein Epoxidharz oder ein organisch-anorganisches Hybridmaterial verwendet wird.

In einer Ausführungsform der Erfindung ist die Unterlage, beziehungsweise das mineralische Trägermaterial aus Beton gebildet. Ebenfalls möglich sind aber auch andere mineralische Trägermaterialien, wie etwa Stein oder Gips. Weiterhin ist es auch möglich, mehrere mineralische Trägermaterialien miteinander zu kombinieren. Beispielsweise kann eine untere Trägerschicht aus Beton mit einer oberen Trägerschicht aus einem Mineralguss, Zement oder Gips kombiniert werden. Weiterhin ist es auch möglich, die Oberfläche der mineralbasierten Unterlage zu vergüten. Beispielsweise kann die Oberfläche der Unterlage mit einer Imprägnierung oder Versiegelung versehen werden.

Bevorzugt ist die Unterlage als bewehrte Unterlage, vorzugsweise aus bewehrtem Beton, gebildet.

Gemäß einer Variante der Erfindung kann die Unterlage so ausgestaltet ein, dass bei der Nachbearbeitung des auflagernden Werkstücks anfallende Rückstände rückstandsfrei und ohne Beschädigung des Werkstücks selbst abgeführt werden können.

Aus diesem Grund kann die Unterlage dergestalt ausgestattet sein, dass bei der Bearbeitung des Werkstücks anfallende Rückstände ableitbar sind.

Dafür kann die Oberfläche der Unterlage beispielsweise glatt sein, oder mit Rillen ausgestaltet vorliegen.

Die Oberfläche der Unterlage kann weiterhin einen Ablauf aufweisen, mittels dessen bei der Bearbeitung des Werkstücks entstehende Rückstände ableitbar sind.

Gemäß einer Ausführungsform der Erfindung ist der Ablauf aus netzartig angeordneten, aus radialstrahligen sowie kreisförmigen Elementen bestehenden Rillen gebildet.

In einer Ausführungsform der Erfindung ist der Ablauf an der Oberfläche der konkav gewölbten Unterlage angeordnet und weist ein Gefälle hin zu einer zentral angeordneten Vertiefung auf. Sofern diese als Durchlass ausgebildet ist, sind durch sie Rückstände, die bei der Nachverarbeitung des auflagernden Werkstücks anfallen, ableitbar.

In einer weiteren Ausführungsform ist das die Unterlage bildende Material nach erfolgter Herstellung nachbearbeitbar. Bevorzugt erfolgt die Bearbeitung mittels CNC-gesteuerter Maschinen.

Um eine optimale, möglichst vollflächige Unterstützung des Werkstücks durch die Unterlage zu gewährleisten, ist die Unterlage in einer Ausführungsform der Erfindung im Wesentlichen genauso groß wie das aufzulagernde Werkstück oder größer.

Die Erfindung umfasst weiterhin einen Verbund, der aus einer monolithischen Unterlage und einem auf dessen Oberfläche gelagerten flächigen Werkstück, beispielsweise einem Glas-, Glaskeramik- oder Keramikelement, wobei das Werkstück, also beispielsweise das Glas-, Glaskeramik- oder Keramikelement, wobei das Werkstück ein Spiegelträgersubstrat ist und wobei das Werkstück mit einer seiner Flächen auf der Oberfläche der monolithischen Unterlage aufliegt, wobei das Glas-, Glaskeramik- oder Keramikelement zumindest eines der Merkmale aufweist:
- das Verhältnis von Durchmesser oder lateraler Abmessung zu dessen mittlerer Dicke beträgt mindestens 50, vorzugsweise mindestens 100, besonders bevorzugt mindestens 150 sowie ganz besonders bevorzugt mindestens 200 und am meisten bevorzugt 300 oder mehr
- das Verhältnis von Flächengewicht zu Durchmesser beträgt 100 kg/m³ oder weniger und besonders bevorzugt 30 kg/m³ oder weniger.

Gemäß der Erfindung ist das als Glas-, Glaskeramik- oder Keramikelement ausgebildete Werkstück ein Spiegelträgersubstrat.

Gemäß der Erfindung ist die Fläche des Werkstücks, mit der das Werkstück auf der Oberfläche der Unterlage gelagert ist, ebenfalls mit einer Folie oder einem Verbund aus Folien versehen.

### Beschreibung der Zeichnungen

Fig. 1 zeigt einen Querschnitt durch eine mögliche erfindungsgemäße Unterlage.
Fig. 2 zeigt eine Aufsicht auf eine weitere mögliche erfindungsgemäß ausgebildete Unterlage.
Fig. 3 zeigt eine weitere mögliche erfindungsgemäße Unterlage, die auf einem Metallträger gelagert ist.
Fig. 4 zeigt einen Verbund aus Unterlage und aufgelagertem Werkstück, wobei die Unterlage konkav gewölbt ist.
Fig. 5 zeigt einen Verbund aus Unterlage und aufgelagertem Werkstück, wobei die Unterlage konvex gewölbt ist.
Fig. 6 zeigt in schematischer Darstellung eine Ausführungsform der Unterlage in Aufsicht.

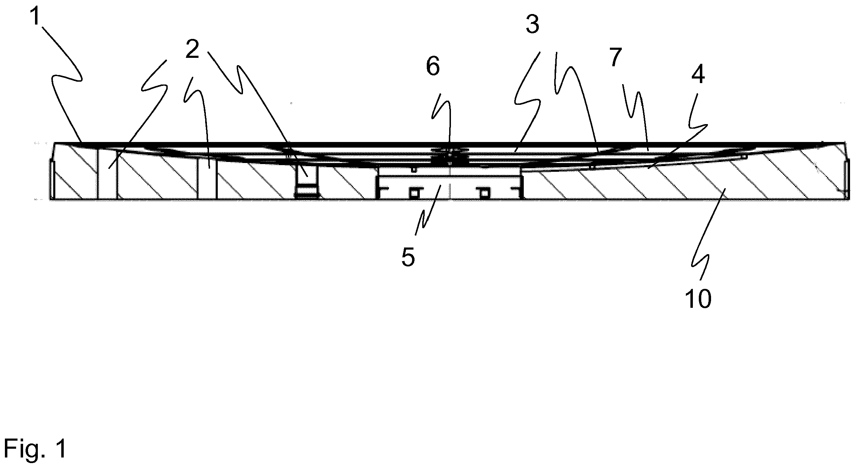

Fig. 1 zeigt einen Querschnitt durch eine Ausführungsform einer gemäß der vorliegenden Erfindung ausgebildete Unterlage 1 mit einem mineralbasierten Trägermaterial 10 zur im Wesentlichen vollflächigen Unterstützung bei Lagerung und Nachbearbeitung großer Werkstücke 20. Im Querschnitt sind die Durchlässe 2 zu sehen, mit denen auf einfache Art eine Qualitätskontrolle der Unterlage möglich ist. Weiterhin erkennbar ist der aus netzartig angeordneten, aus radialstrahligen sowie kreisförmigen Elementen bestehenden Rillen gebildete Ablauf 3, durch den bei der Nachbearbeitung des auflagernden Werkstücks anfallende Rückstände ableitbar sind. Die Unterlage 1 ist dabei dergestalt ausgebildet, dass die Oberfläche 4, welche die Auflagefläche für das Werkstück bildet, ein Gefälle zur Mitte der Unterlage 1 hin aufweist, wobei in der geometrischen Mitte der Unterlage 1 eine zentral angeordnete Vertiefung 5 vorliegt. Diese zentral angeordnete Vertiefung kann durchgehend, beispielsweise als Durchlass, durch den die bei Nachbearbeitungsschritten anfallenden Rückstände ableitbar sind, ausgebildet sein, aber auch als unten geschlossenes Loch vorliegen. Die Unterlage 1 weist weitere Vorrichtungen 6 zur Aufnahme von Mitteln, mittels derer das aufzulagernde Werkstück von unten von der Unterlage 1 angehoben werden kann, auf. Ebenfalls dargestellt sind Segmente 7 der Oberfläche 4 der Unterlage 1, wobei zur besseren Übersichtlichkeit nicht alle Segmente bezeichnet sind. Das Anheben des Werkstücks 20 kann dabei sowohl dergestalt erfolgen, dass die Mittel kissenartig ausgebildet sind, so dass durch das Einleiten eines Fluids in diese Mittel das Werkstück angehoben wird, oder dass es durch das Einleiten eines Fluids, beispielsweise von Druckluft, zu einer Levitation, d.h. einer berührungsfreien Anhebung des Werkstücks (20) kommt, so dass dieses in einem Schwebezustand über der Unterlage 1 gehalten wird.

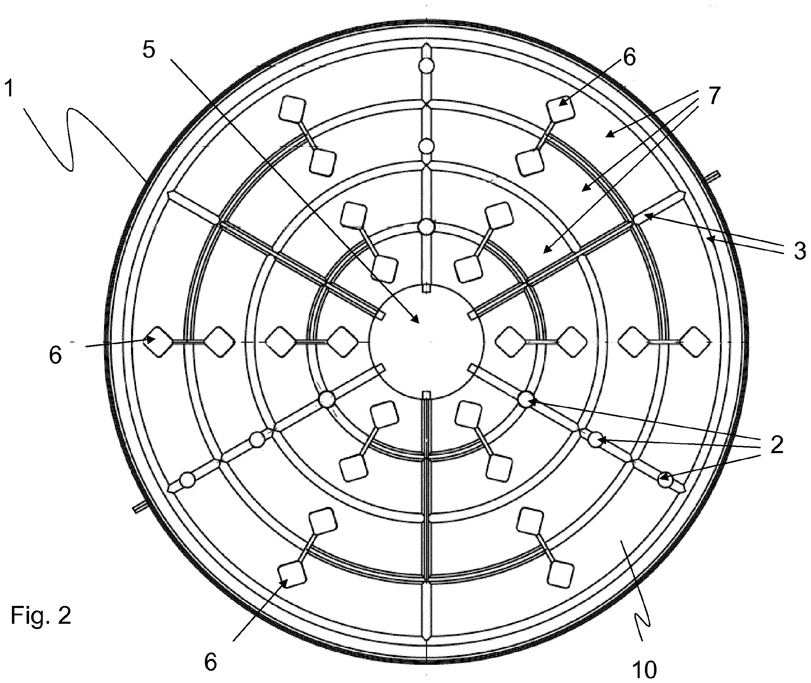

Fig. 2 zeigt eine Aufsicht auf eine weitere Ausführungsform einer Unterlage 1 aus einem Trägermaterial 10. Erkennbar sind die Bohrungen 2. Diese sind zueinander in einem Abstand von jeweils 120° zueinander angeordnet. Mittels dieser Bohrungen ist auf einfache Art eine Qualitätskontrolle der Unterlage möglich, die insbesondere auch ein Monitoring der inneren Eigenschaften der Unterlage, beispielsweise ihres Gefüges, ermöglicht. Ebenfalls erkennbar sind die netzartig ausgebildeten, aus radialstrahligen sowie kreisförmigen Elementen bestehenden als Rillen ausgebildeten Abläufe 3, sowie die Vorrichtungen zur Aufnahme von Mitteln, mittels derer das aufzulagernde Werkstück von unten von der Unterlage 1 angehoben werden kann. Diese Mittel sind hier beispielhaft kissenartig als hantelförmige Segmente ausgebildet, die durch in die als Rillen ausgebildeten Abläufe eingelassene Verbindungsstücke untereinander verbunden sind. Durch Einleitung eines Fluids, beispielsweise von Wasser, Druckluft oder auch Öl, können diese Kissen aufgefüllt werden und dabei durch den dadurch erzeugten Druck auf das auflagernde Werkstück, der der Schwerkraft des Werkstücks entgegenwirkt, ohne eine Berührung des Werkstücks von oben durch Greifer oder ähnliche Elemente über die Oberfläche 4 der Unterlage 1 anheben. Auf diese Weise wird eine laterale Verschiebung des auflagernden Werkstücks ebenso ermöglicht wie ein Angreifen der Unterseite des auflagernden Werkstücks durch geeignete Greifelemente.

In einer weiteren Ausführungsform der Erfindung erfolgt das Anheben von unten des auflagernden Werkstücks durch Düsen, durch die ein geeignetes Fluid, beispielsweise Druckluft, dergestalt geleitet wird, dass das auflagernde Werkstück durch den so erzeugten Druck, der die Gewichtskraft des Werkstücks kompensiert, von der Unterlage 1 angehoben wird. Hierbei handelt es sich durch berührungsfreies Anheben durch Levitation. Dabei müssen die Bohrungen 2 z.B. mit adäquaten Stopfen verschlossen sein.

In den Segmenten 7 der Oberfläche 4, die durch die Abläufe 3 und die Vorrichtungen zur Aufnahme von Mitteln zum Anheben des auflagernden Werkstücks von unten gebildet werden, ist die Oberfläche 4 der Unterlage 1 dergestalt ausgebildet, dass ein Anhaften des Werkstücks an der Unterlage 1 unterbunden wird. Dies erfolgt zweckmäßigerweise dadurch, dass die Oberfläche 4 der Unterlage 1 mit einer Antihaftbeschichtung ausgerüstet ist. Zur besseren Übersichtlichkeit sind nicht alle Segmente 7 bezeichnet.

In einer Ausführungsform der Erfindung ist diese Antihaftbeschichtung dabei als Folie bzw. als ein Verbund von Folien ausgebildet, die Dicke mindestens 50 µm, bevorzugt mindestens 60 µm und besonders bevorzugt mindestens 65 µm beträgt.

In einer Ausführungsform der Erfindung ist die Folie als Polymerfolie ausgebildet. Bevorzugt besteht die Folie aus Polypropylen und/oder Polyethylen.

In einer weiteren Ausführungsform der Erfindung ist die Antihaftbeschichtung als ein Verbund aus Folien, beispielsweise aus 3 Folien, gebildet.

Weiterhin ist die Folie mindestens auf dem inneren sowie dem äußeren Rand der Unterlage 1 aufgebracht. Darüber hinaus kann die Folie auf anderen Bereichen der Unterlage 1 als Streifen oder in Form einzelner Pads bzw. Flicken und/oder in Kombinationen davon vorliegen.

Ebenfalls in Fig. 2 dargestellt sind die Bohrungen 2 sowie die zentral angeordnete Vertiefung 5.

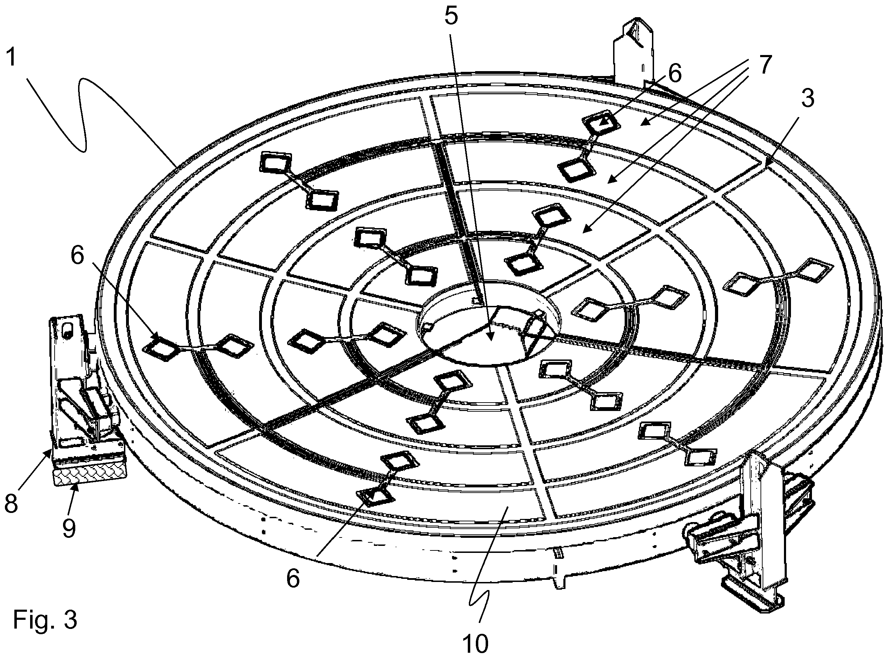

Fig. 3 zeigt eine weitere Abbildung der Ausführungsform der Unterlage 1 aus einem Trägermaterial 10 mit Abläufen 6 und kissenartig ausgebildeten Mitteln zum Anheben des auflagernden Werkstücks von unten. Die Unterlage 1 ist hierbei auf einen Metallträger 8, beispielsweise einen Stahlträger, aufgelagert. Erkennbar sind wiederum die zentral angeordnete Vertiefung 5, die Vorrichtungen zur Aufnahme von Mitteln zum Anheben des auflagernden Werkstücks von unten und die Abläufe 3 sowie die durch sie gebildeten Segmente 7 der Oberfläche 4. Unterhalb des Metallträgers 8 kann, wie hier schematisch für einen Metallträger 8 dargestellt, ein Stoßdämpfer 9 angeordnet sein. Eine solche Kombination der monolithischen Unterlage 1 mit Metallträger 8 und Stoßdämpfern 9, die vorzugsweise unter dem Metallträger 8 angeordnet sind, kann auf besonders einfache Weise eventuell auftretende Stöße abfangen und so das aufzulagernde Werkstück vor Beschädigung schützen. Besonders geeignet für die Stoßdämpfer haben sich dabei Metalldraht- oder Metallseil-Kissen erwiesen, um auch beim hohen Gewicht der Anordnung für Glas oder Glaskeramik besonders kritische steile Flanken des Schwingungsspektrums auszufiltern.

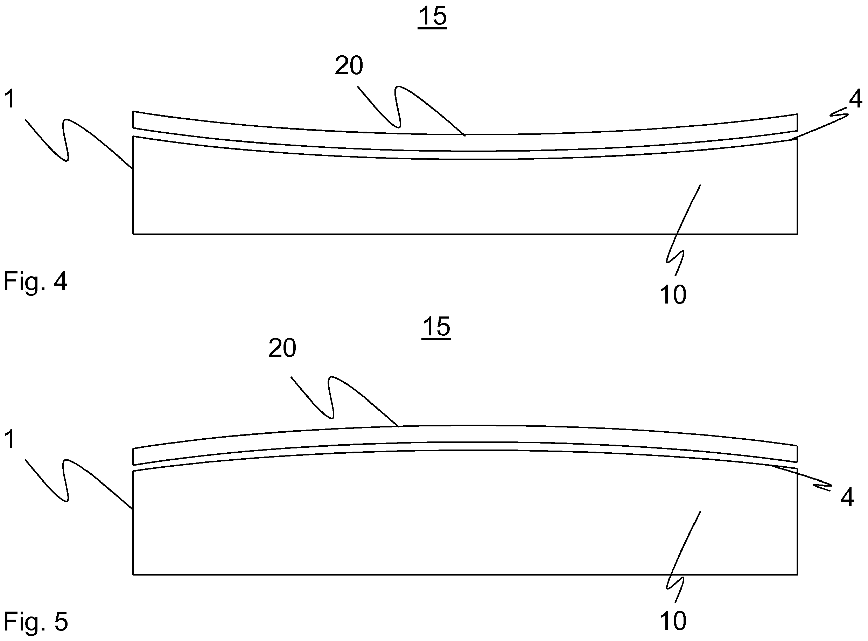

Fig. 4 zeigt schematisch den Verbund 15, gebildet aus der mineralbasierten monolithischen Unterlage 1 aus einem Trägermaterial 10 und einem auflagernden Glas-, Glaskeramik- oder Keramikelement 20. Dieses Glas-, Glaskeramik- oder Keramikelement 20 ist dabei dergestalt ausgebildet, dass die Fläche, mit der das Element 20 auf der Unterlage 1 aufliegt, konvex gewölbt ist. Die Oberfläche 4 der Unterlage 1 ist dagegen, um eine möglichst optimale Unterstützung des Werkstücks bzw. des Glas-, Glaskeramik- oder Keramikelements zu gewährleisten, konkav nach unten gewölbt.

Fig. 5 zeigt schematisch den Verbund 15, gebildet aus der mineralbasierten monolithischen Unterlage 1 aus einem Trägermaterial 10 und einem auflagernden Glas-, Glaskeramik- oder Keramikelement 20, wobei das Glas-, Glaskeramik- oder Keramikelement 20 dabei dergestalt ausgebildet ist, dass die Fläche, mit denen das Element 20 auf der Unterlage 1 aufliegt, konkav gewölbt ist. Die Oberfläche 4 der Unterlage 1 ist dagegen, um eine möglichst optimale Unterstützung des Werkstücks bzw. des Glas-, Glaskeramik- oder Keramikelements 20 zu gewährleisten, konvex nach oben gewölbt.

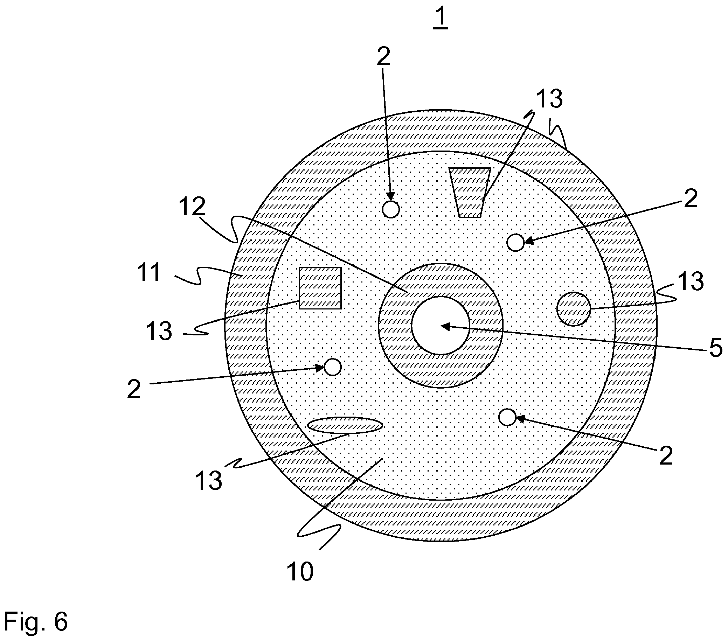

Fig. 6 zeigt in vereinfachter schematischer Darstellung eine Aufsicht einer Ausführungsform der Unterlage 1. Die Unterlage 1 aus einem im Wesentlichen anorganischen Trägermaterial 10 weist eine zentral angeordnete Vertiefung 5 sowie Bohrungen 2 auf. Weiterhin weist die Unterlage 1 einen Rand auf, welcher als innerer Rand 12 und als äußerer Rand 11 ausgebildet sein kann. Der Rand 11, 12 ist versehen mit einer Antihaftbeschichtung 13, welche als Folie oder als Verbund von Folien ausgebildet ist. Weiterhin kann die Antihaftbeschichtung 13 auch in weiteren Bereichen der Unterlage 1 aufgebracht sein, beispielhaft in flicken- oder Pad-artiger Form. Auch möglich ist das Anbringen der Antihaftbeschichtung 13 in Form von Streifen, beispielsweise in Form von radialstrahligen Streifen, oder konzentrischen Ringen, aber auch in anderen Ausführungsformen, beispielsweise in Form von wie dargestellt regellos über die Oberfläche verteilten "Flicken".

Die Bohrungen 2 dienen dabei zum einen der Qualitätssicherung des Trägermaterials 10, da auf diese Weise die Eigenschaften des Trägermaterials 10, beispielsweise der Aushärtegrad, untersucht werden können. Weiterhin können die Bohrungen 2 aber auch dazu verwendet werden, bei auflagerndem Werkstück 20, also bei Vorliegen des Verbundes 15, einen erhöhten Druckanzulegen, beispielsweise zum Anheben des Werkstücks 20 von unten.

### Bezugszeichenliste

- 1 -: Unterlage
- 2 -: Bohrung
- 3 -: netzartig als Rinnen ausgebildeter Ablauf
- 4 -: Oberfläche der Unterlage
- 5 -: zentral angeordnete Vertiefung
- 6 -: Vorrichtung zur Aufnahme von Mitteln zum Anheben eines auflagernden Werkstücks von unten
- 7 -: Segment der Oberfläche der Unterlage
- 8 -: Metallträger
- 9 -: Stoßdämpfer
- 10 -: Trägermaterial
- 11 -: äußerer Rand
- 12 -: innerer Rand
- 13 -: Antihaftbeschichtung
- 15 -: Verbund aus monolithischem Trägermaterial und auflagerndem Glas-, Glaskeramik- oder Keramikelement
- 20 -: Werkstück, beispielhaft aus Glas-, Glaskeramik- oder Keramikelement

## Patentansprüche

1. Monolithische Unterlage (1) mit einem mineralbasiertem Trägermaterial (10) zur vollflächigen Unterstützung eines Werkstücks (20), wobei das Werkstück ein Substrat für einen Spiegelträger ist, bei Bearbeitung und/oder Transport, wobei die Oberfläche (4) der Unterlage (1) so ausgestaltet ist, dass Anhaftungen des aufliegenden Werkstücks unterbunden werden, und wobei die Unterlage (1) Vorrichtungen (6) aufweist, in die Mittel, mit denen das Werkstück (20) von unten von der Unterlage (1) angehoben und/oder lateral verschoben werden kann, eingelassen sind, wobei die Oberfläche (4) der Unterlage (1) in den das auflagernde Werkstück (20) berührenden Segmenten (7) zumindest teilweise mit einer Antihaftbeschichtung (13) ausgerüstet ist und wobei die Antihaftbeschichtung (13) als eine Folie oder ein Verbund von Folien ausgebildet ist.

2. Monolithische Unterlage (1) nach Anspruch 1, **dadurch gekennzeichnet, dass** zumindest der Rand (12, 11) der zur Auflage bestimmten Fläche der Unterlage (1) mit einer Antihaftbeschichtung (13) versehen ist.

3. Monolithische Unterlage (1) nach einem der Ansprüche 1 oder 2, **dadurch gekennzeichnet, dass** die Folie oder der Verbund von Folien aus Polyethylen oder Polypropylen ausgebildet ist, wobei weiterhin bevorzugt
- die Folie als Polymerfolie mit Antihafteigenschaften ausgebildet ist und/oder
- die Dicke einer Folie mindestens 50 µm, bevorzugt mindestens 60 µm und besonders bevorzugt mindestens 65 µm beträgt und/oder
- Der Folienverbund aus mindestens drei Folien besteht.

4. Monolithische Unterlage (1) nach einem der Ansprüche 1 bis 3, wobei die Unterlage (1) eine zentral angeordnete Vertiefung (5) aufweist.

5. Monolithische Unterlage (1) nach einem der Ansprüche 1 bis 4, wobei die Unterlage (1) weiterhin durchgehende Bohrungen (2) aufweist.

6. Monolithische Unterlage (1) nach einem der Ansprüche 1 bis 5, wobei die Oberfläche (4) der Unterlage (1) so ausgestaltet ist, dass bei der Bearbeitung des Werkstücks (20) anfallende Rückstände ableitbar sind, bevorzugt dergestalt, dass die Oberfläche (4) der Unterlage (1) einen Ablauf (3) aufweist, der aus netzartig angeordneten, aus radialstrahligen sowie kreisförmigen Elementen bestehenden Rillen gebildet ist.

7. Monolithische Unterlage (1) nach einem der Ansprüche 1 bis 6, **dadurch gekennzeichnet, dass** die Mittel zum Anheben von unten und/oder lateralen Verschieben des Werkstücks von der Unterlage (1) pneumatisch und/oder hydraulisch ausgebildet sind, und wobei bevorzugt
- die Mittel zum Anheben von unten und/oder lateralem Verschieben mindestens eine Düse umfassen, durch die mindestens ein Fluid, vorzugsweise Luft, Öl oder Wasser, leitbar ist und/oder
- die Mittel zum Anheben von unten und/oder lateralem Verschieben kissenartig ausgebildet sind, wobei besonders bevorzugt die Unterlage (1) derartig ausgebildet ist, dass durch Einleitung eines Fluids, vorzugsweise Luft, Öl oder Wasser, in die kissenartig ausgebildeten Mittel das auflagernde Werkstück (20) angehoben wird.

8. Monolithische Unterlage (1) nach einem der Ansprüche 1 bis 7, **dadurch gekennzeichnet**, das die Unterlage (1) im Wesentlichen anorganisch ausgebildet ist.

9. Monolithische Unterlage (1) nach Anspruch 8, **dadurch gekennzeichnet, dass** das mineralbasierte Trägermaterial (10) aus einer Gussmasse gebildet ist, welche mindestens einen anorganischen nichtmetallischen Feststoff, mindestens ein Flussmittel sowie mindestens ein Bindemittel umfasst.

10. Monolithische Unterlage (1) nach Anspruch 9, **gekennzeichnet durch** zumindest eines der Merkmale:
- der mindestens eine, anorganische nichtmetallische Feststoff ist als Körnung ausgebildet, vorzugsweise beträgt der d₉₉ der die Körnung bildenden Partikel dabei 20 mm,
- das mindestens eine Flussmittel umfasst Wasser,
- das mindestens eine Bindemittel umfasst Zement und/oder ein Epoxidharz und/oder ein organisch-anorganisches Hybridmaterial.

11. Monolithische Unterlage (1) nach einem der Ansprüche 1 bis 10, **dadurch gekennzeichnet, dass** die Unterlage (1) als bewehrte Unterlage, vorzugsweise aus bewehrtem Beton gebildet ist.

12. Monolithische Unterlage (1) nach einem der Ansprüche 1 bis 11, **dadurch gekennzeichnet, dass** die Unterlage (1) im Wesentlichen genauso groß wie das aufzulagernde Werkstück (20) oder größer ist.

13. Verbund (15) umfassend eine mineralbasierte monolithische Unterlage (1) nach einem der Ansprüche 1 bis 12 und einem auf deren Oberfläche (4) gelagerten flächigen Werkstück (20), beispielsweise einem Glas-, Glaskeramik- oder Keramikelement, wobei das Werkstück ein Spiegelträgersubstrat ist und wobei das Werkstück (20) mit einer seiner Flächen auf der Oberfläche (4) der monolithischen Unterlage (1) aufliegt, wobei das Werkstück (20) zumindest eines der Merkmale aufweist:
- das Verhältnis von Durchmesser, bzw. lateraler Abmessung zu dessen mittlerer Dicke beträgt mindestens 50, bevorzugt mindestens 100, besonders bevorzugt mindestens 150 sowie ganz besonders bevorzugt mindestens 200 und am meisten bevorzugt 300 oder mehr,
- das Verhältnis von Flächengewicht zu Durchmesser beträgt 100 kg/m³ oder weniger, bevorzugt 30 kg/m³ oder weniger.

14. Verbund (15) gemäß Anspruch 13, **dadurch gekennzeichnet, dass** das Glas- Glaskeramik- oder Keramikelement (20) einen thermischen Ausdehnungskoeffizienten α von kleiner oder 3^{∗}10⁻⁶/K, bevorzugt von kleiner oder gleich 1^{∗}10⁻⁶/K auf, besonders bevorzugt von kleiner oder gleich 0,1^{∗}10⁻⁶/K und ganz besonders bevorzugt kleiner oder gleich 0,05^{∗}10⁻⁶/K aufweist.

15. Verbund (15) gemäß einem der Ansprüche 13 oder 14, **dadurch gekennzeichnet, dass** das Glas-, Glaskeramik- oder Keramikelement (20) ein Spiegelträgersubstrat ist.

16. Verbund (15) gemäß einem der Ansprüche 13 bis 15, **dadurch gekennzeichnet, dass** die Oberfläche (4) der Unterlage (1) und die Fläche des Glas- Glaskeramik- oder Keramikelements (20), welche auf der Oberfläche (4) aufliegt, gegengleich gewölbt sind.

17. Verbund (15) gemäß einem der Ansprüche 13 bis 16, wobei die Unterlage (1) auf einen Metallträger (8) aufgelagert ist, und wobei Metalldraht- oder Metallseil-Kissen als Stoßdämpfer (9), vorzugsweise unter dem Metallträger (8) vorgesehen sind.

## Claims

1. A monolithic support (1) comprising a mineral-based carrier material (10) for full-surface support of a workpiece (20) during processing and/or transport, the workpiece being a mirror carrier substrate, wherein the surface (4) of the support (1) is designed so that adherence of the supported workpiece is prevented, and wherein the support (1) has provisions (6) with means inserted therein, which permit to lift the workpiece (20) from the support (1) from below and/or to shift it laterally; wherein segments (7) of the surface (4) of the support (1) which are contacting the supported workpiece (20) are provided with an anti-adhesive coating (13), at least partially; and wherein the anti-adhesive coating (13) is a film or a laminate of films.

2. The monolithic support (1) according to claim 1, **characterised in that** at least the periphery (12, 11) of the intended supporting surface of the support (1) is provided with an anti-adhesive coating (13).

3. The monolithic support (1) according to any one of claims 1 or 2, **characterised in that** the film or the laminate of films is made of polyethylene or polypropylene; wherein furthermore preferably
- the film is in the form of a polymer film having anti-adhesive properties; and/or
- one film has a thickness of at least 50 µm, preferably at least 60 µm, and more preferably at least 65 µm; and/or
- the laminate of films consists of at least three films.

4. The monolithic support (1) according to any one of claims 1 to 3, wherein the support (1) has a central recess (5).

5. The monolithic support (1) according to any one of claims 1 to 4, wherein the support (1) furthermore has through-bores (2).

6. The monolithic support (1) according to any one of claims 1 to 5, wherein the surface (4) of the support (1) is designed so that residues generated during processing of the workpiece (20) can be removed, preferably by having a drainage (3) provided in the surface (4) of the support (1), which is defined by a web-like arrangement of channels consisting of radially extending and circular features.

7. The monolithic support (1) according to any one of claims 1 to 6, **characterised in that** said means for lifting the workpiece from the support (1) from below and/or shifting it laterally are pneumatic and/or hydraulic means; and wherein preferably
- said means for lifting from below and/or shifting laterally comprise at least one nozzle adapted for directing at least one fluid therethrough, preferably air, oil, or water; and/or
- said means for lifting from below and/or shifting laterally are cushion-like means, wherein most preferably the support (1) is configured such that the supported workpiece (20) is lifted when injecting a fluid, preferably air, oil, or water, into the cushion-like means.

8. The monolithic support (1) according to any one of claims 1 to 7, **characterised in that** the support (1) is substantially made of inorganic material.

9. The monolithic support (1) according to claim 8, **characterised in that** the mineral-based carrier material (10) is formed from a moulding compound which comprises at least one inorganic non-metallic solid, at least one flowing agent, and at least one binding agent.

10. The monolithic support (1) according to claim 9, **characterised by** at least one of the following features:
- the at least one inorganic non-metallic solid is an aggregate, preferably with a d₉₉ of 20 mm of the particles forming the aggregate;
- the at least one flowing agent comprises water;
- the at least one binding agent comprises cement and/or an epoxy resin and/or an organic-inorganic hybrid material.

11. The monolithic support (1) according to any one of claims 1 to 10, **characterised in that** the support (1) is a reinforced support, preferably made of reinforced concrete.

12. The monolithic support (1) according to any one of claims 1 to 11, **characterised in that** the support (1) is substantially as large as the workpiece (20) to be supported or larger.

13. An assembly (15), comprising a mineral-based monolithic support (1) according to any one of claims 1 to 12 and a sheet-like workpiece (20) supported on the surface (4) thereof, for example a glass, glass ceramic, or ceramic element, wherein the workpiece is a mirror carrier substrate and wherein the workpiece (20) rests on the surface (4) of the monolithic support (1) with one of its faces, wherein the workpiece (20) exhibits at least one of the following features:
- a ratio of diameter or lateral dimension to the average thickness thereof is at least 50, preferably at least 100, more preferably at least 150, and particularly preferably at least 200, and most preferably 300 or more;
- a ratio of basis weight to diameter is 100 kg/m³ or less, preferably 30 kg/m³ or less.

14. The assembly (15) according to claim 13, **characterised in that** the glass, glass ceramic, or ceramic element (20) has a coefficient of thermal expansion α of less than or equal to 3^{∗}10⁻⁶/K, preferably less than or equal to 1^{∗}10⁻⁶/K, more preferably less than or equal to 0.1^{∗}10⁻⁶/K, and most preferably less than or equal to 0.05^{∗}10⁻⁶/K.

15. The assembly (15) according to any one of claims 13 or 14, **characterised in that** the glass, glass ceramic, or ceramic element (20) is a mirror carrier substrate.

16. The assembly (15) according to any one of claims 13 to 15, **characterised in that** the surface (4) of the support (1) and the face of the glass, glass ceramic, or ceramic element (20) resting on said surface (4) have conforming curvatures.

17. The assembly (15) according to any one of claims 13 to 16, wherein the support (1) is mounted on a metal carrier (8), and wherein metal wire or metal rope pads are provided as shock absorbers (9), preferably below the metal carrier (8).

## Revendications

1. Base monolithique (1) comportant un matériau support (10) à base minérale pour le soutien en pleine surface d'une pièce (20), la pièce étant un substrat pour un porte-miroir, lors d'un usinage et/ou d'un transport, la surface (4) de la base (1) étant conçue de façon à empêcher des adhérences de la pièce posée par-dessus, et la base (1) présentant des dispositifs (6) dans lesquels sont encastrés des moyens à l'aide desquels il est possible de lever la pièce (20) à partir d'un point situé en-dessous de la base (1) et/ou de la déplacer latéralement, la surface (4) de la base (1), dans les segments (7) en contact avec la pièce (20) destinée à être posée par-dessus, étant au moins partiellement munis d'un revêtement anti-adhérent (13), le revêtement anti-adhérent (13) étant conçu sous forme d'une feuille ou d'un assemblage de feuilles.

2. Base monolithique (1) selon la revendication 1, **caractérisée en ce qu'**au moins le bord (12, 11) de la surface de la base (1), destinée à servir de support, est pourvue d'un revêtement antiadhésif (13).

3. Base monolithique (1) selon l'une des revendications 1 ou 2, **caractérisée en ce que** la feuille ou l'assemblage de feuilles est constitué de polyéthylène ou de polypropylène, et en outre, d'une manière préférée,
- la feuille est conçue comme une feuille d'un polymère présentant des propriétés anti-adhérentes, et/ou
- l'épaisseur d'une feuille est d'au moins 50 µm, de préférence d'au moins 60 µm et d'une manière particulièrement préférée d'au moins 65 µm, et/ou
- l'assemblage de feuilles est constitué d'au moins trois feuilles.

4. Base monolithique (1) selon l'une des revendications 1 à 3, la base (1) présentant un renfoncement (5) en position centrale.

5. Base monolithique (1) selon l'une des revendications 1 à 4, la base (1) présentant en outre des trous traversants (2).

6. Base monolithique (1) selon l'une des revendications 1 à 5, dans laquelle la surface (4) de la base (1) est conçue de façon que les résidus obtenus lors de l'usinage de la pièce (20) puissent être évacués, de préférence de telle sorte que la surface (4) de la base (1) présente un déversoir (3), qui est formé de rainures constituées d'éléments disposés en réseau, en rayons, ainsi que circulaires.

7. Base monolithique (1) selon l'une des revendications 1 à 6, **caractérisée en ce que** les moyens pour lever à partir du bas et/ou pour le déplacement latéral de la pièce à partir de la base (1) sont conçus pneumatiques et/ou hydrauliques, et de préférence
- les moyens pour le levage à partir d'un point situé en-dessous et/ou le déplacement latéral comprennent au moins une buse, par laquelle peut être envoyé au moins un fluide, de préférence l'air, une huile ou de l'eau, et/ou
- les moyens pour le levage à partir du bas et/ou pour le déplacement latéral sont conçus en forme de coussin, d'une manière particulièrement préférée la base (1) étant conçue de façon que la pièce (20) destinée à être posée par-dessus soit levée par introduction d'un fluide, de préférence l'air, une huile ou de l'eau, dans les moyens en forme de coussin.

8. Base monolithique (1) selon l'une des revendications 1 à 7, la base (1) étant **caractérisée en ce qu'**elle est pour l'essentiel conçue inorganique.

9. Base monolithique (1) selon la revendication 8, **caractérisée en ce que** le matériau support (10) à base minérale est formé d'une masse de coulée, qui comprend au moins un solide non métallique inorganique, au moins un fondant et au moins un liant.

10. Base monolithique (1) selon la revendication 9, **caractérisée par** au moins l'une des caractéristiques suivantes :
- l'au moins un solide non métallique inorganique est conçu comme un ensemble granulaire, la d₉₉ des particules formant la structure granulaire étant alors de 20 mm,
- l'au moins un fondant comprend l'eau,
- l'au moins un liant comprend du ciment et/ou une résine époxyde et/ou un matériau hybride organique-inorganique.

11. Base monolithique (1) selon l'une des revendications 1 à 10, la base (1) étant **caractérisée en ce qu'**elle est formée d'une base armée, de préférence de béton armé.

12. Base monolithique (1) selon l'une des revendications 1 à 11, la base (1) étant **caractérisée en ce qu'**elle a pour l'essentiel exactement les mêmes dimensions que la pièce (20) destinée à être posée par-dessus, ou a des dimensions plus grandes.

13. Assemblage (15) comprenant une base monolithique (1) à base minérale selon l'une des revendications 1 à 12 et une pièce (20) bidimensionnelle, posée sur la surface (4), par exemple un élément en verre, en vitrocéramique ou en céramique, la pièce étant un substrat pour porte-miroir, et la pièce (20) reposant par l'une de ses faces sur la surface (4) de la base monolithique (1), la pièce (20) présentant au moins l'une des caractéristiques suivantes :
- le rapport du diamètre, ou de la dimension latérale, à son épaisseur moyenne est d'au moins 50, de préférence d'au moins 100, d'une manière particulièrement préférée d'au moins 150, d'une manière tout particulièrement préférée d'au moins 200, et tout spécialement de 300 ou plus,
- le rapport de la masse surfacique au diamètre est de 100 kg/m³ ou moins, de préférence de 30 kg/m³ ou moins.

14. Assemblage (15) selon la revendication 13, **caractérisé en ce que** l'élément (20) en verre, en vitro-céramique ou en céramique présente un coefficient de dilatation thermique α inférieur à ou 3^{∗}10⁻⁶/K, de préférence inférieur ou égal à 1^{∗}10⁻⁶/K, d'une manière particulièrement préférée inférieur ou égal à 0,1^{∗}10⁻⁶/K, et d'une manière tout particulièrement préférée inférieur ou égal à 0,05^{∗}10⁻⁶/K.

15. Assemblage (15) selon l'une des revendications 13 ou 14, **caractérisé en ce que** l'élément (20) en verre, en vitrocéramique ou en céramique est un substrat pour un porte-miroir.

16. Assemblage (15) selon l'une des revendications 13 à 15, **caractérisé en ce que** la surface (4) de la base (1) et la face de l'élément (20) en verre, en vitrocéramique ou en céramique qui repose sur la surface (4), présentent des bombements inversés en miroir.

17. Assemblage (15) selon l'une des revendications 13 à 16, dans lequel la base (1) est disposée sur un support métallique (8), des coussins en fil métallique ou en câble métallique étant prévus en tant qu'amortisseurs, de préférence en-dessous du support métallique (8).
